# FASCICULE DE BREVET EUROPEEN

(11) **EP 3 008 419 B1**
(45) Date de publication et mention de la délivrance du brevet: **21.03.2018**
(21) Numéro de dépôt: 14735997.0
(22) Date de dépôt: 06.05.2014
(51) Int. Cl.: G01B 11/08, G01B 11/12

(54) **DISPOSITIF POUR LA MESURE DE DIAMETRE**
VORRICHTUNG ZUR DURCHMESSERBESTIMMUNG
APPARATUS FOR MEASURING DIAMETER

(30) Priorité: 14.06.2013 FR 1301380
(43) Date de publication de la demande: 20.04.2016
(73) Titulaire: ISP System, 65501 Vic-en-Bigorre Cedex (FR)
(72) Inventeur: SAUVAGEOT Paul, F-65501 Vic-en-Bigorre Cedex (FR); OUTAHYON Alex, F-65501 Vic-en-Bigorre Cedex (FR)
(74) Mandataire: Célanie, Christian
(86) Numéro de dépôt international: PCT/FR2014/000099
(87) Numéro de publication internationale: WO 2014/199025

(56) Documents cités:
- JP-A- 2003 106 823
- US-A- 4 725 883
- US-A- 5 871 391

## Description

Le secteur technique de la présente invention est celui des dispositifs de mesure et en particulier les dispositifs pour contrôler le diamètre d'un alésage ou d'un arbre.

Le contrôle des pièces mécaniques est omniprésent dans l'industrie. Une pièce mécanique peut par exemple être mesurée pour des raisons fonctionnelles ou par sécurité, selon un cahier des charges. Un diamètre interne ou externe peut être mesuré manuellement à l'aide d'un pied à coulisse.

La demande de brevet US-2009/0178289 décrit un dispositif de mesure automatique du diamètre intérieur d'un trou. Ce dispositif utilise la mesure du remplissage d'un ballon dans le trou pour déterminer son diamètre. Ce dispositif de mesure du diamètre est cependant relativement peu précis.

Le brevet US-4307514 enseigne également une jauge de mesure automatique du diamètre d'un trou. Cette jauge comprend toutefois une structure complexe nécessitant une grande précision dans son assemblage pour permettre d'effectuer une mesure correcte. Le brevet US-5 871 391-A enseigne une méthode de localisation d'un outil tel qu'un palpeur, ainsi que la mesure d'un diamètre interne ou externe au moyen de palpeurs. Le brevet JP-2003/106823-A concerne une méthode de mesure par analyse d'une image à deux dimensions améliorée par l'utilisation de gabarits.

Le brevet US-4 725 883-A concerne un dispositif de contrôle de la surface interne d'un tube comprenant une caméra et un palpeur se déplaçant axialement à l'intérieur du tube.

La présente invention a pour but de pallier les inconvénients de l'art antérieur en fournissant un dispositif de mesure automatique d'un diamètre dont la mise en oeuvre et l'utilisation sont simplifiées. Cet objectif est atteint grâce à un dispositif tel que revendiqué dans la revendication indépendante de dispositif 1. Selon une particularité de l'invention, ladite image est également représentative du contour de la section du trou ou de l'arbre dont le diamètre est mesuré.

Selon une autre particularité de l'invention, ladite image est également représentative du centre de la section du trou ou de l'arbre dont le diamètre est mesuré.

Selon une autre particularité de l'invention, l'organe de capture de ladite image est agencé de façon à réaliser une mise au point dans le plan de contact des butées.

Selon une autre particularité de l'invention, les butées se présentent chacune sous la forme d'une sphère ou d'une portion de sphère de diamètre connu, chaque profil déterminé se présentant sous la forme d'un arc de cercle. Selon une autre particularité de l'invention, ledit profil déterminé de chaque butée, visible par l'organe de capture, est disposée sur chaque butée à l'opposée d'une surface d'appui de chaque butée contre la paroi interne du trou ou contre la paroi externe de l'arbre.

Selon une autre particularité de l'invention, deux profils déterminés chaque butée, visibles par l'organe de capture, sont disposées sur chaque butée de part et d'autre d'une surface d'appui de chaque butée contre la paroi interne du trou ou contre la paroi externe de l'arbre.

Selon une autre particularité, le dispositif selon l'invention comprend un organe d'éclairage des butées.

Selon une autre particularité de l'invention, utilisée pour la mesure du diamètre d'un trou, les butées sont disposées entre l'organe d'éclairage et l'organe de capture de ladite image.

Selon une autre particularité, le dispositif selon l'invention comprend un élément de repérage disposé dans le champ de vision de l'organe de capture, en avant des butées.

Selon une autre particularité de l'invention, les butées sont agencées par rapport à l'organe d'approche de façon à délimiter une ligne de contact disposée dans un plan perpendiculaire à l'axe de l'organe d'approche.

Selon une autre particularité, le dispositif selon l'invention comprend un organe de préhension dont la position par rapport à l'organe d'approche est déterminée.

Selon une autre particularité de l'invention, utilisée pour la mesure du diamètre d'un trou l'organe d'approche se présente sous la forme d'un tube creux étanche, les butées étant saillantes à l'intérieur et à l'extérieur de ce tube.

Selon une autre particularité de l'invention, ladite image est générée sous forme d'un fichier informatique stocké en mémoire et traité par un composant de traitement selon au moins un programme mémorisé de traitement d'image prenant en compte des données représentatives dudit profil de la portion visible de chaque butée.

Un tout premier avantage est que le dispositif de mesure selon l'invention est simple à mettre en oeuvre, tout en permettant d'effectuer des mesures d'une grande précision.

Un autre avantage de la présente invention réside dans le fait que le centrage d'un trou ou d'un arbre peut être contrôlé ainsi que leur contour.

Un avantage de la présente invention réside encore dans le fait que le dispositif de mesure automatique peut être installé sur un bras manipulateur ou intégré dans un poste de travail. Une fonction de métrologie peut ainsi être ajoutée à celle d'usinage.

Un autre avantage du dispositif de mesure selon la présente invention est qu'il permet d'effectuer successivement différentes mesures à différentes profondeurs pour fournir une représentation dans l'espace du trou ou de l'arbre contrôlé.

Un autre avantage du dispositif de mesure selon l'invention est qu'il permet d'effectuer des mesures sur un arbre ou dans un alésage, sans avoir à démonter la pièce usinée.

Un autre avantage du dispositif de mesure selon la présente invention est sa souplesse d'utilisation. En effet grâce à l'indépendance de mouvement des butées, procurée notamment par la membrane, les défauts d'angle introduits dans la phase d'approche n'influencent pas la mesure. Le dispositif de mesure de diamètre selon l'invention tolère par ailleurs des désalignements radiaux et axiaux et il n'est pas non plus nécessaire qu'il soit parfaitement centré. Cette capacité de déformation permet de conférer de la robustesse au dispositif de mesure.

Un avantage du dispositif de mesure selon l'invention réside encore dans le fait que la plage de mesure du diamètre peut s'étendre sur plusieurs millimètres.

Un autre avantage du dispositif de mesure selon l'invention est sa robustesse du fait de son étanchéité.

Un autre avantage du dispositif de mesure selon l'invention est qu'il peut être utilisé même dans le cas de surfaces souillées ou irrégulières.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente une vue en coupe longitudinale d'un dispositif pour la mesure de diamètre d'un trou;
- les figures 2 à 4 représentent chacune une section transversale effectuée dans le plan de contact des butées pour la mesure du diamètre d'un trou;
- la figure 5 représente une vue de face et en coupe du dispositif de mesure de la figure 1 ;
- la figure 6 représente l'extrémité du tube d'approche de la figure 1 ;
- la figure 7 représente en détails l'agencement des butées et de la membrane de la figure 5;
- la figure 8 représente une vue en coupe longitudinale d'un dispositif pour la mesure du diamètre d'un arbre;
- la figure 9 représente une vue en perspective du dispositif de mesure de la figure 8 ;
- la figure 10 représente une vue de face et en coupe du dispositif de mesure de la figure 8 ;
- les figures 11 et 12 représentent deux types de sources d'éclairage associés à deux types d'organes de capture d'image.

L'invention va à présent être décrite avec davantage de détails. Les mêmes références sont utilisées sur les figures pour désigner les mêmes éléments.

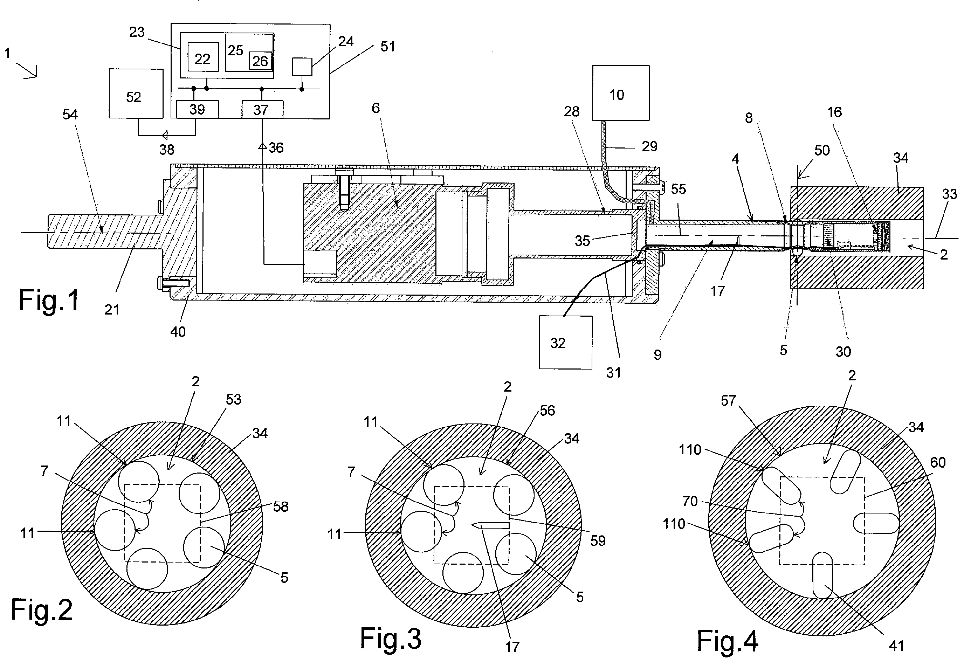

La figure 1 représente une vue en coupe longitudinale d'un dispositif 1 pour la mesure du diamètre d'un trou 2 réalisé dans une pièce 34. Le dispositif 1 de mesure comprend un organe de préhension 21 cylindrique solidaire d'un corps 40 dans lequel est aménagé un organe 6 de capture d'image. L'organe de capture d'image 6 comprend par exemple une carte de gestion d'un capteur optoélectronique devant lequel un jeu de lentilles 28 est disposé.

Le corps 40 est fixé à un organe d'approche 4 se présentant sous la forme d'un tube creux. Ce tube creux 4 est destiné à être inséré dans le trou 2. Ce tube creux 4 est notamment étanche. Des butées 5, se présentant sous la forme de billes, sont disposées de façon à être saillantes à l'intérieur et à l'extérieur de ce tube 4. Les butées 5 sont fixées à une membrane souple 8 elle-même fixée au tube creux.

Dans le corps 40, l'organe 6 de capture d'image est disposé en face d'une face 35 transparente. Cette face transparente 35 est par ailleurs disposée dans l'alignement du tube creux 4, de façon à ce que l'intérieur 9 du tube creux soit disposé dans le champ de vision de l'organe de capture d'image 6.

Les butées 5 mobiles par rapport à l'organe d'approche 4 sont destinées à venir contre la paroi interne du trou 2. Elles comprennent alors une portion visible par l'organe de capture d'image.

L'intérieur du tube creux forme par ailleurs une chambre étanche 9. La paroi 35 transparente ferme de façon étanche une extrémité du tube 4 creux, tandis que son extrémité opposée est fermée de façon étanche par un bouchon. La membrane 8 souple qui délimite également la chambre 9, est également fixée au tube creux 4 de façon étanche.

La chambre 9, à l'intérieur du tube creux 4, est par ailleurs reliée par un canal 29 à un organe 10 de réglage de la pression. Ainsi lorsque la chambre 9 étanche est mise sous pression, la membrane 8 souple se déforme sous l'effet de la pression de l'air. Les butées 5 se déplacent alors radialement vers l'extérieur du tube creux 4 jusqu'à venir en contact avec la paroi intérieure du trou 2.

Lorsque l'organe 10 de réglage de la pression abaisse de nouveau la pression dans la chambre 9, les butées s'éloignent de la paroi interne du trou 2, permettant de déplacer l'organe d'approche par rapport à la pièce 34.

Les butées peuvent aussi être guidées dans des alésages de l'organe d'approche et ajustées sans membrane, la chambre de mise en pression s'étendant alors jusqu'au bord des alésages de logement des butées. Une micro-fuite est alors tolérable. Le faible jeu permet d'amener les butées en retrait lors d'un déplacement de l'organe d'approche par dépression ou par l'action d'un ressort de rappel. Pour la mesure, les butées sont amenées contre la paroi interne du trou ou la paroi externe de l'arbre par une mise en pression de la chambre 9.

L'organe 6 de capture d'image génère un signal numérique 36 représentatif de l'image capturée. Plusieurs images peuvent également être capturées dans le cas d'une capture vidéo. L'organe 6 de capture d'image est agencé de façon à réaliser une mise au point dans le plan 50 de contact des butées 5.

Une capture d'image est réalisée après positionnement de l'organe d'approche et après une mise en pression de la chambre 9. L'image capturée est représentative de la position des butées 5 lorsqu'elles sont en contact avec la paroi intérieure du trou 2.

Pour améliorer la qualité de l'image, un organe d'éclairage est prévu. L'organe d'éclairage comprend des diodes 16 reliées par une connexion électrique 31 à un organe d'alimentation en énergie électrique 32. L'organe d'éclairage comprend également un diffuseur 30 pour éclairer les butées à l'intérieur du tube creux, de façon homogène. Les butées, disposées entre l'organe 6 de capture d'image et l'organe d'éclairage, sont ici retro-éclairées.

Le signal 36 représentatif de l'image capturée est reçu par un port d'entrée 37 d'un organe 51 de gestion et stocké en mémoire 23, par son composant de traitement 24, sous la forme d'un fichier informatique 22.

Le composant mémoire 23 stocke également un programme 25 de traitement d'image prenant en compte des données 26 représentatives d'un profil déterminé des butées.

Dans le cas de la mesure du diamètre d'un trou, les profils identifiés par le programme de traitement sont des portions 7 des butées disposées à l'opposé de leur surface 11 de contact.

Après le stockage de l'image capturée, le programme 25 est exécuté par le composant de traitement 24 qui génère un signal 38 de sortie représentatif du diamètre mesuré, par le port de sortie 39. Le signal de sortie 38 est par exemple transmis, par le port 39 de sortie, à un ordinateur 52. La mesure réalisée avec au moins cinq butées permet en effet de déterminer les mesures de l'alésage ou de l'arbre à partir d'une seule image capturée. Bien-entendu plusieurs images peuvent être utilisées. Avantageusement, un traitement des données en temps réel est facilité.

Le programme 25 peut également être structuré pour générer des données 38 représentatives de la forme du contour ou du centrage du trou 2.

Le centrage peut par exemple être déterminé en fonction de la position de l'axe 54 de l'organe de préhension 21. La position de l'axe 55 de l'organe d'approche 4 est en effet connue par rapport à celle de l'organe de préhension 4. La position de l'axe 55 de l'organe d'approche correspond à une position déterminée sur l'image capturée. La position de l'axe 55 est en effet détectée par une ou plusieurs cellules photosensibles déterminées. On peut donc détecter un décalage entre l'axe de l'organe d'approche 55 et l'axe 33 du trou, en fonction de la position commandée de l'organe 21 de préhension.

Le préhenseur 21 permet au dispositif de mesure d'être installé sur un bras manipulateur ou intégré dans un poste de travail. Le dispositif de mesure peut avantageusement être orienté et déplacé pour s'adapter à la position et à l'orientation de la pièce 34 à contrôler. La pièce 34 peut ainsi être contrôlée sans qu'il soit nécessaire de la démonter.

Le déplacement du dispositif mesure selon l'axe du trou 2 permet de réaliser différentes mesures du diamètre pour obtenir un profil tridimensionnel du trou 2. Les butées sont commandées successivement en appui contre la paroi à contrôler puis en retrait par rapport à celle-ci avant de déplacer le dispositif de mesure, tandis qu'une image est capturée chaque fois que les butées sont positionnées contre la paroi à contrôler.

Les figures 2 à 4 représentent différents exemples de mesure de diamètre d'un trou.

La figure 2 représente une capture d'image 58, permettant de déterminer des éléments caractéristiques du contour 53 du trou 2. Les butées 5 se présentent sous la forme de billes sphériques. Les butées 5 présentent chacune une surface de contact 11 disposée à l'opposé d'une portion 7 disposée dans le champ de vision de l'organe de capture d'image.

Les profils 7 détectés, grâce à la capture de l'image 58, sont ici des arcs de cercle. Il est ainsi possible, par calcul, de déterminer les positions des butées ainsi que les points de contact des butées. La butée complète a en effet ici un profil circulaire. Trois points suffisant alors pour déterminer le profil complet, les arcs de cercle permettent donc de déterminer le profil complet. Mais ce type de raisonnement peut être étendu à différents profils complets des butées et à différentes portions visibles de ces profils complets. Le diamètre peut ainsi être calculé, de même que le centrage ou que la forme du contour 53.

Comme décrit précédemment, les butées sont saillantes à l'intérieur du tube creux ce qui permet à la portion 7 à l'opposé de la surface de contact 11, d'être placée dans le champ de vision de la caméra 6.

La figure 3 représente un autre contour 56 possible du trou 2 dont la forme est elliptique. Les butées 5 sont également constituées par des billes. Dans l'image 59 capturée, les positions des profils visibles 7 des butées 5 qui sont à l'opposé des surfaces de contact 11 des butées 5, permettent de déterminer les positions des butées. Les surfaces de contact 11 peuvent être déduites ainsi que le diamètre, la forme du contour ainsi que le centrage du trou.

Un organe 17 de repérage est par ailleurs disposé dans le champ de vision de l'organe de capture d'image. Cet organe 17 de repérage est fixé dans le tube creux, en avant des butées. Cet organe de repérage est de profil en pointe, la pointe indiquant une position prédéterminée, fixe par rapport à l'organe de préhension 21. La pointe indique par exemple la position de l'axe central 55 de l'organe d'approche 4. Ainsi le centrage peut être vérifié, de façon redondante, par le positionnement d'une pièce mécanique fixe.

La figure 4 représente un autre contour 57 possible du trou 2. Les butées 41 sont chacune de forme oblongue. Pour chaque butée, la surface en contact avec la pièce et la surface observée par le moyen de capture d'image sont inscrites dans une même sphère. Dans l'image 60 capturée, les positions des profils visibles 70 des butées 41 qui sont à l'opposé des surfaces de contact 110 des butées 41, permettent de déterminer les positions des butées. Les surfaces de contact 110 peuvent être déduites ainsi que le diamètre, la forme du contour ainsi que le centrage du trou.

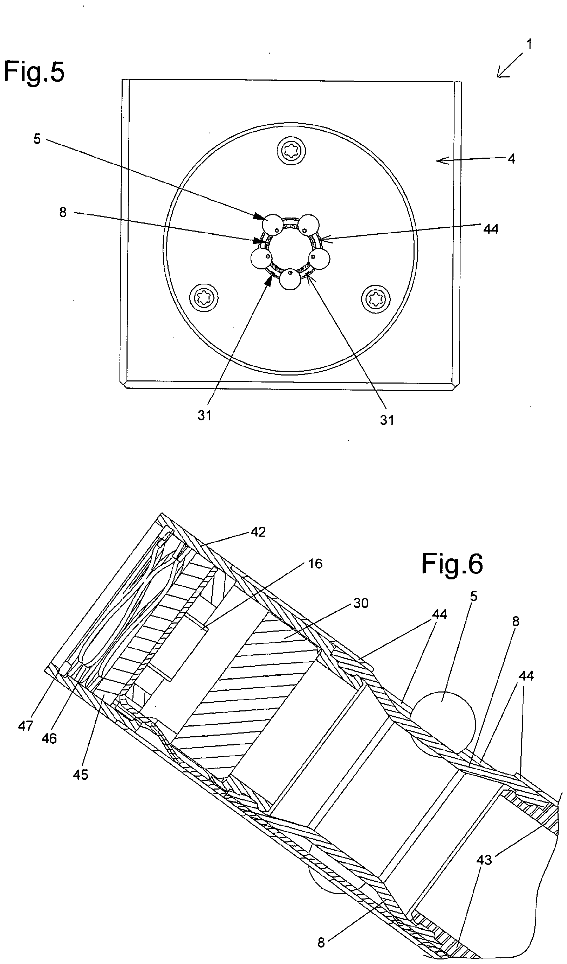

La figure 5 représente le dispositif 1 de mesure seul, en vue de face. Les butées 5 se présentent sous la forme de billes de même diamètre, chaque profil visible déterminé se présentant sous la forme d'un arc de cercle.

Les butées 5 sont saillantes à la fois à l'intérieur du tube creux et à l'extérieur du tube creux. Les billes 5 sont jointes à la membrane 8. Un perçage est prévu dans chaque bille 5, la membrane 8 étant surmoulée sur les billes.

Les butées 5 sont agencées par rapport à l'organe 4 d'approche de façon à délimiter une ligne de contact disposée dans un plan perpendiculaire à l'axe de l'organe d'approche.

Les liaisons électriques 31 pour l'alimentation de l'organe d'éclairage apparaissent à l'intérieur du tube creux. Les cinq billes sont réparties régulièrement autour de l'organe d'approche, mais on peut prévoir une autre répartition ou un nombre de butées différent. Une configuration à au moins cinq billes est avantageuse notamment pour la mesure d'un profil elliptique. Les dimensions et l'orientation de la section ovale d'un alésage ou d'un arbre pourront alors être déterminées précisément.

La figure 6 représente l'extrémité du tube creux d'approche pour la mesure du diamètre d'un trou. Le tube creux comprend une portion arrière 43 et une portion avant 42 reliées entre elles par un manchon 44 ajouré. La portion arrière 43 est fixée au corps du dispositif de mesure du diamètre.

Le manchon ajouré 44 permet le passage des butées 5 mobiles.

La membrane souple 8 est maintenue d'une part entre la portion avant 42 et le manchon ajouré 44 et d'autre part entre la portion arrière 43 et ce manchon ajouré 44.

La portion avant 42 est fermée de façon étanche à son extrémité par un bouchon 45 maintenu par un ressort 46 disposé en appui contre un anneau élastique 47. L'anneau élastique 47 est disposé dans une rainure interne de la portion avant 42 du tube creux.

Les diodes 16 d'éclairage sont fixées au bouchon 45 vers la chambre à l'intérieur du tube creux. Le diffuseur 30 est fixé dans la portion avant 42 du tube creux.

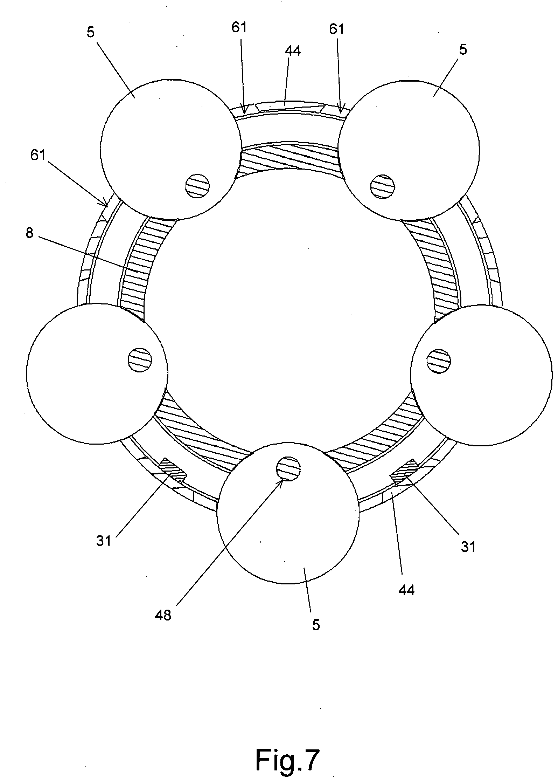

La figure 7 représente une coupe selon un plan perpendiculaire à l'axe du tube creux. Les lignes 31 l'alimentation sont collées contre la surface intérieur du manchon ajouré 44 et contre les portions du tube creux, de façon à ne pas gêner le visionnage des butées.

Le manchon ajouré comprend des passages radiaux 61 pour le passage des butées.

Les butées 5 comprennent chacune un alésage 48 par lequel passe un brin de matière constitutive de la membrane 8 surmoulée sur les butées 5.

Ce plan de coupe, perpendiculaire à l'axe du tube creux, correspond par exemple au plan de contact des butées et à une zone de mise au point de l'image par l'organe de capture d'image.

Les butées sont réalisées selon des dimensions déterminées, avec une précision déterminée. De cette façon le dispositif de mesure est utilisé pour des mesures de même précision. La précision des mesures peut par exemple être réalisée à quelques micromètres près. Pour une meilleure précision, il est possible de calibrer le dispositif de mesure de diamètre grâce à une étape préalable à son utilisation, dans laquelle on effectue une mesure d'un calibre étalon permettant notamment de paramétrer un programme de traitement d'image.

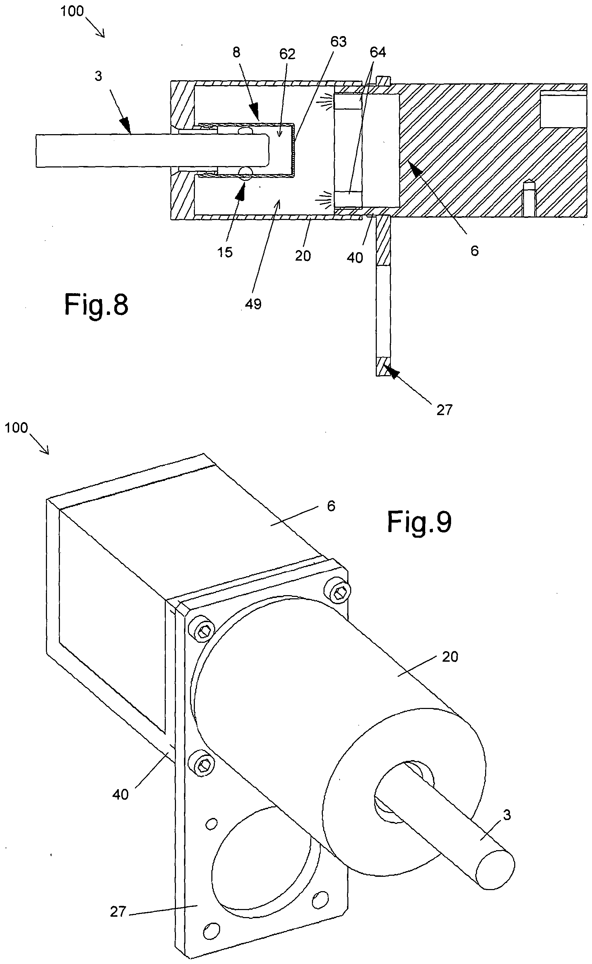

La figure 8 représente un dispositif 100 pour la mesure du diamètre d'un arbre 3.

Le dispositif 100 de mesure comprend un organe de préhension 27 déporté se présentant sous la forme d'une plaquette 27 alésée solidaire d'un corps 40 dans lequel est aménagé l'organe 6 de capture d'image.

Le corps 40 est fixé à l'organe d'approche 20 se présentant sous la forme d'un carter délimitant un logement 62 cylindrique ainsi qu'une chambre 49 autour du logement 62.

Ce logement 62 débouche en face avant du carter 20 et est destiné à recevoir l'arbre 3 mesuré.

Des butées 15, se présentant sous la forme de billes, sont disposées de façon à être saillantes à l'intérieur et à l'extérieur du logement 62. Les butées sont ainsi saillantes dans la chambre 49. Les butées 15 sont fixées à une membrane souple 8 elle-même fixée au carter 20.

Dans le corps 40, l'organe 6 de capture d'image est disposé en face de la chambre 49 et en face du fond 63 du logement 62.

Les butées 15 mobiles par rapport à l'organe d'approche 20 sont destinées à venir contre la paroi externe de l'arbre 3. Les portions des butées saillantes dans la chambre 49 sont alors disposées dans le champ de vision de l'organe de capture d'image 6.

La chambre 49 autour du logement 62 est par ailleurs étanche. Cette chambre étanche 49 est reliée par un canal à un organe de réglage de la pression, de même que décrit précédemment. Ainsi lorsque la chambre 49 étanche est mise sous pression, la membrane 8 souple se déforme sous l'effet de la pression de l'air. Les butées 15 se déplacent alors radialement vers l'intérieur du logement 62 jusqu'à venir en contact avec la paroi extérieure de l'arbre 3.

Lorsque l'organe de réglage de la pression abaisse de nouveau la pression dans la chambre 49, les butées s'éloignent de la paroi externe de l'arbre 3, permettant de déplacer l'organe d'approche par rapport à l'arbre 3.

L'organe 6 de capture d'image génère un signal numérique 36 représentatif d'au moins une image capturée et est agencé de façon à réaliser une mise au point dans le plan de contact des butées 15.

Une capture d'image est réalisée après positionnement de l'organe d'approche et après une mise en pression de la chambre 49. L'image capturée est représentative de la position des butées 15 lorsqu'elles sont en contact avec la paroi extérieure de l'arbre 3.

Pour améliorer la qualité de l'image, un organe d'éclairage est prévu. L'organe d'éclairage se présente sous la forme de modules périphériques 64 disposé au niveau du jeu de lentilles optiques placées devant le capteur photoélectrique. Les butées sont ici éclairées par éclairage direct.

Le signal représentatif de l'image capturée est reçu et traité, comme décrit précédemment.

La figure 9 est une vue en perspective du dispositif de mesure de la figure 8. Là encore le dispositif de mesure est peu encombrant et permet une manipulation par un bras manipulateur ou une installation sur un poste de travail.

Le dispositif de mesure peut avantageusement être orienté et déplacé pour s'adapter à la position et à l'orientation de l'arbre 3 à contrôler. L'arbre 3 peut ainsi être contrôlé sans qu'il soit nécessaire de le démonter.

Le déplacement du dispositif 100 de mesure selon l'axe de l'arbre 3, permet de réaliser différentes mesures du diamètre pour obtenir un profil tridimensionnel de l'arbre. Les butées 15 sont commandées successivement en appui contre la paroi à contrôler puis en retrait par rapport à celle-ci avant de déplacer le dispositif de mesure, tandis qu'une image est capturée chaque fois que les butées sont positionnées contre la paroi à contrôler.

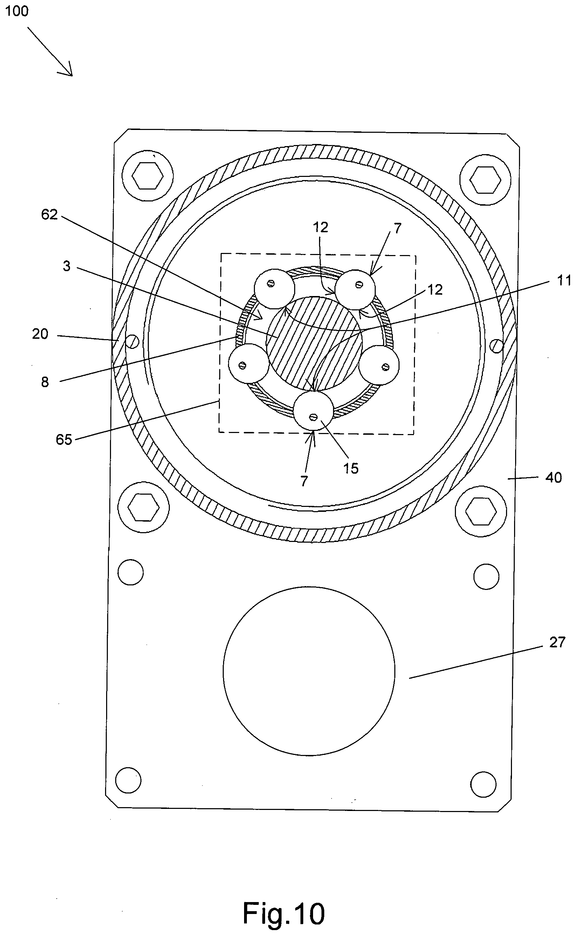

La figure 10 représente une vue en coupe et de face du dispositif de mesure 100, permettant de déterminer des éléments caractéristiques du contour de l'arbre 3. Les butées 15 se présentent sous la forme de billes sphériques. Les butées 15 présentent chacune une surface de contact 11 disposée à l'opposé d'une portion 7 disposée dans le champ de vision de l'organe 6 de capture de l'image 65.

Les profils 7 détectés, grâce à la capture de l'image 65, sont ici des arcs de cercle. Il est ainsi possible, par calcul, de déterminer les positions des butées 15 ainsi que les points de contact des butées. Le diamètre de l'arbre peut ainsi être calculé, de même que le centrage ou que la forme du contour de l'arbre 3.

Les butées 15 sont saillantes à l'extérieur du logement 62, ce qui permet à la portion 7 à l'opposé de la surface de contact 11, d'être placée dans le champ de vision de l'organe 6 de capture d'image.

Dans le cas où le fond 63 du logement 62 est transparent, les portions 12 disposées sur chaque butée 15 de part et d'autre de leur surface d'appui 11, sont visibles par l'organe 6 de capture de l'image 65. Ces portions 12 peuvent alors également être détectées pour déterminer la position des butées.

Comme décrit précédemment, les butées comprennent un alésage dans lequel est disposé un brin constitutif de la membrane surmoulée sur les butées.

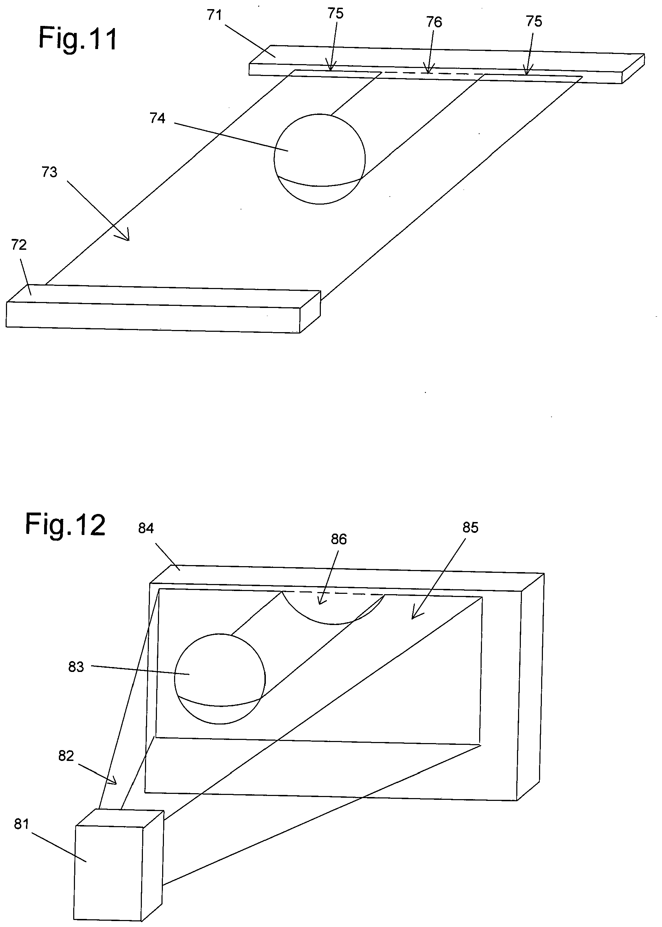

La figure 11 représente un capteur ligne 71 d'un organe de capture d'image. Le capteur ligne 71 photosensible est illuminé partiellement par un organe d'éclairage 72 générant un faisceau lumineux plan 73. Le faisceau plan 73 rencontre une butée sphérique 74 et le capteur ligne 71. L'image perçue par le capteur 71 se présente sous la forme d'une ligne représentative de deux portions 75 illuminée séparée par une portion 76 assombrie. La portion assombrie 76 correspond, notamment par sa position et ses dimensions, au masquage du faisceau lumineux 73 par la butée 74. La position de la butée peut donc être déduite.

La figure 12 représente un capteur à deux dimensions 84 d'un organe de capture d'image. Le capteur à deux dimensions 84 photosensible est illuminé partiellement par un organe d'éclairage 81 générant un faisceau lumineux pyramidal 82. Le faisceau pyramidal 82 rencontre une butée sphérique 83 et le capteur à deux dimensions 84. L'image perçue par le capteur 84 se présente sous la forme d'une image à deux dimensions représentatives d'une portion 85 illuminée et d'une portion 86 assombrie. La portion assombrie 86 correspond, notamment par sa forme, ses dimensions et sa position, au masquage du faisceau lumineux 82 par la butée 83. La position de la butée peut donc être déduite.

On peut également prévoir un éclairage naturel ou un dégagement de rayons infrarouges captés par l'organe de capture d'image. Une ouverture ou une paroi transparente permettent par exemple le passage de la lumière ambiante. Un organe de chauffage des butées préalablement à leur utilisation peut leur permettre d'émettre un rayonnement infrarouge.

Il doit être évident pour l'homme du métier que la présente invention permet d'autres variantes de réalisation, sans toutefois sortir du cadre de l'invention telle que revendiquée. Par conséquent, les présents modes de réalisation doivent être considérés comme illustrant l'invention.

## Revendications

1. Dispositif (1, 100) pour la mesure du diamètre d'un trou (2) ou d'un arbre (3), tel qu' il comprend au moins:
- un organe d'approche (4, 20) de la paroi interne du trou (2) ou de la paroi externe de l'arbre (3),
- des butées (5, 15) mobiles par rapport à l'organe d'approche (4, 20) et destinées à venir contre la paroi interne du trou (2) ou contre la paroi externe de l'arbre (3) et
- un organe (6) de capture d'au moins une image (58, 59, 60, 65) sous forme de ligne ou à deux dimensions,
dispositif (1) de mesure dans lequel les butées (5, 15) comprennent chacune au moins une portion visible par l'organe (6) de capture, au moins lorsque les butées (5, 15) sont disposées contre la paroi interne du trou (2) ou contre la paroi externe de l'arbre (3), chaque portion visible délimitant un profil (7, 12) déterminé de façon à ce que ladite image soit représentative du diamètre, dispositif **caractérisé en ce que** les butées (5, 15) sont solidaires d'au moins une membrane (8) souple, ladite membrane (8) souple délimitant au moins une chambre (9, 49), ladite membrane (8) souple étant déformable sous l'effet d'une mise sous pression par un organe (10) de réglage de la pression dans ladite chambre (9, 49), ladite chambre (9, 49) étant aménagée dans l'organe (4, 20) d'approche de façon à ce que les butées (5, 15) avancent vers la paroi interne du trou (2) ou la paroi externe de l'arbre (3) lors de la mise sous pression.

2. Dispositif (1) de mesure selon la revendication 1, **caractérisé en ce que** les butées (5, 15) se présentent chacune sous la forme d'une sphère ou d'une portion de sphère de diamètre connu, chaque profil (7, 12) déterminé se présentant sous la forme d'un arc de cercle.

3. Dispositif (1) de mesure selon la revendication 1 ou 2, **caractérisé en ce que** deux profils (12) déterminés de chaque butée (15), visibles par l'organe (6) de capture, sont disposées sur chaque butée (15) de part et d'autre d'une surface d'appui (11) de chaque butée (15) contre la paroi interne du trou (2) ou contre la paroi externe de l'arbre (3) .

4. Dispositif (1) de mesure selon la revendication 1 ou 2, **caractérisé en ce que** ledit profil (7, 12) déterminé de chaque butée (5, 15), visible par l'organe (6) de capture, est disposée sur chaque butée (5, 15) à l'opposée d'une surface d'appui (11) de chaque butée contre la paroi interne du trou (2) ou contre la paroi externe de l'arbre (3).

5. Dispositif (1) de mesure selon l'une des revendications précédentes, **caractérisé en ce que** ladite image (58, 59, 60, 65) est également représentative du contour de la section du trou (2) ou de l'arbre (3) dont le diamètre est mesuré.

6. Dispositif (1) de mesure selon l'une des revendications précédentes, **caractérisé en ce que** cinq butées se présentant sous forme de billes sont réparties régulièrement autour de l'organe d'approche.

7. Dispositif (1) de mesure selon l'une des revendications précédentes, **caractérisé en ce que** l'organe (6) de capture de ladite image (58, 59, 60, 65) est agencé de façon à réaliser une mise au point dans le plan (50) de contact des butées (5, 15).

8. Dispositif (1) de mesure selon l'une des revendications précédentes, **caractérisé en ce qu'**il comprend un organe (16, 64) d'éclairage des butées (5, 15).

9. Dispositif (1) de mesure selon la revendication précédente, utilisé pour la mesure dudit trou (2), **caractérisé en ce que** les butées (5) sont disposées entre l'organe d'éclairage (16) et l'organe (6) de capture de ladite image.

10. Dispositif (1) de mesure selon l'une des revendications précédentes, **caractérisé en ce qu'**il comprend un élément (17) de repérage disposé dans le champ de vision de l'organe (6) de capture, en avant des butées (5).

11. Dispositif (1) de mesure selon l'une des revendications précédentes, **caractérisé en ce que** les butées (5, 15) sont agencées par rapport à l'organe (4, 20) d'approche de façon à délimiter une ligne de contact disposée dans un plan (50) perpendiculaire à l'axe (55) de l'organe (4, 20) d'approche.

12. Dispositif (1) de mesure selon la revendication précédente, **caractérisé en ce qu'**il comprend un organe (21, 27) de préhension dont la position par rapport à l'organe d'approche est déterminée.

13. Dispositif (1) de mesure selon l'une des revendications précédentes, utilisé pour la mesure dudit trou (2), caractérisé en ce l'organe (4) d'approche se présente sous la forme d'un tube creux étanche, les butées (5) étant saillantes à l'intérieur et à l'extérieur de ce tube.

14. Dispositif (1) de mesure selon l'une des revendications précédentes, **caractérisé en ce que** ladite image est générée sous forme d'un fichier (22) informatique stocké en mémoire (23) et traité par un composant (24) de traitement selon au moins un programme (25) mémorisé de traitement d'image prenant en compte des données (26) représentatives dudit profil (7, 12) de la portion visible de chaque butée (5, 15).

## Patentansprüche

1. Vorrichtung (1, 100) für die Messung des Durchmessers eines Lochs (2) oder einer Welle (3), mindestens aufweisend:
- ein Organ zur Annäherung (4, 20) an die Innenwand des Lochs (2) oder an die Außenwand der Welle (3),
- Anschläge (5, 15), welche in Bezug auf das Annäherungsorgan (4, 20) beweglich sind und dafür vorgesehen sind, an der Innenwand des Lochs (2) oder an der Außenwand der Welle (3) anzuliegen, und
- ein Organ (6) zur Aufnahme von mindestens einem Bild (58, 59, 60, 65) in Linienform oder in zwei Dimensionen,
wobei bei der Messvorrichtung (1) die Anschläge (5,15) jeweils mindestens einen von dem Aufnahmeorgan (6) sichtbaren Abschnitt aufweisen, zumindest wenn die Anschläge (5, 15) an der Innenwand des Lochs (2) oder an der Außenwand der Welle (3) angeordnet sind, wobei jeder sichtbare Abschnitt ein Profil (7, 12) abgrenzt, welches derartig festgelegt ist, dass das genannte Bild dem Durchmesser entspricht, wobei die Vorrichtung **dadurch gekennzeichnet ist, dass** die Anschläge (5, 15) fest mit mindestens einer flexiblen Membran (8) verbunden sind, wobei die genannte flexible Membran (8) mindestens eine Kammer (9, 49) begrenzt, wobei die genannte flexible Membran unter der Einwirkung eines Unterdrucksetzens durch ein Organ (10) zur Regelung des Drucks in der genannten Kammer (9, 49)verformbar ist, wobei die genannte Kammer (9, 49) in dem Annäherungsorgan (4, 20) derartig eingerichtet ist, dass beim Unterdrucksetzen die Anschläge (5, 15) in Richtung auf die Innenwand des Lochs (2) oder die Außenwand der Welle (3) vordringen.

2. Messvorrichtung (1) nach Anspruch 1, **dadurch gekennzeichnet, dass** die Anschläge (5, 15) sich jeweils in der Form einer Kugel oder eines Kugelabschnitts mit bekanntem Durchmesser darstellen, wobei sich jedes festgelegte Profil (7, 12) in der Form eines Kreisbogens darstellt.

3. Messvorrichtung (1) nach Anspruch 1 oder 2, **dadurch gekennzeichnet, dass** die beiden festgelegten Profile (12) von jedem Anschlag (15), die von dem Aufnahmeorgan (6) sichtbar sind, an jedem Anschlag (15) beiderseits einer Fläche (11) von jedem Anschlag (15) zum Abstützen an der Innenwand des Lochs (2) oder an der Außenwand der Welle (3) angeordnet sind.

4. Messvorrichtung (1) nach Anspruch 1 oder 2, **dadurch gekennzeichnet, dass** das genannte festgelegte Profil (7, 12) von jedem Anschlag (5, 15), das von dem Aufnahmeorgan (6) sichtbar ist, an jedem Anschlag (5, 15) gegenüberliegend von einer Fläche (11) von jedem Anschlag zum Abstützen an der Innenwand des Lochs (2) oder an der Außenwand der Welle (3) angeordnet ist.

5. Messvorrichtung (1) nach einem der vorhergehenden Ansprüche, **dadurch gekennzeichnet, dass** das genannte Bild (58, 59, 60, 65) auch der Kontur des Teilabschnitts des Lochs (2) oder der Welle (3) entspricht, deren Durchmesser gemessen wird.

6. Messvorrichtung (1) nach einem der vorhergehenden Ansprüche, **dadurch gekennzeichnet, dass** fünf Anschläge, welche sich in Form von Kugeln darstellen, gleichmäßig um das Annäherungsorgan herum verteilt sind.

7. Messvorrichtung (1) nach einem der vorhergehenden Ansprüche, **dadurch gekennzeichnet, dass** das Organ (6) zur Aufnahme des genannten Bildes (58, 59, 60, 65) derartig eingerichtet ist, dass eine Fokussierung in der Kontaktebene (50) der Anschläge (5, 15) zu bewerkstelligt wird.

8. Messvorrichtung (1) nach einem der vorhergehenden Ansprüche, **dadurch gekennzeichnet, dass** sie ein Organ (16, 64) zur Belichtung der Anschläge (5, 15) aufweist.

9. Messvorrichtung (1) nach dem vorhergehenden Anspruch, welche für die Messung des genannten Lochs (2) verwendet wird, **dadurch gekennzeichnet, dass** die Anschläge (5) zwischen dem Belichtungsorgan (16) und dem Organ (6) zur Aufnahme des genannten Bildes angeordnet sind.

10. Messvorrichtung (1) nach einem der vorhergehenden Ansprüche, **dadurch gekennzeichnet, dass** sie ein Kennzeichnungselement (17) aufweist, welches in dem Sichtfeld des Aufnahmeorgans (6) vor den Anschlägen (5) angeordnet ist.

11. Messvorrichtung (1) nach einem der vorhergehenden Ansprüche, **dadurch gekennzeichnet, dass** die Anschläge (5, 15) in Bezug auf das Annäherungsorgan (4, 20) derartig eingerichtet sind, dass eine Kontaktlinie abgegrenzt wird, welche in einer senkrecht zu der Achse (55) des Annäherungsorgans (4, 20) stehenden Ebene (50) angeordnet ist.

12. Messvorrichtung (1) nach dem vorhergehenden Anspruch, **dadurch gekennzeichnet, dass** sie ein Greiforgan (21, 27) aufweist, dessen Position in Bezug auf das Annäherungsorgan festgelegt ist.

13. Messvorrichtung (1) nach einem der vorhergehenden Ansprüche, welche für die Messung des genannten Lochs (2) verwendet wird, **dadurch gekennzeichnet, dass** sich das Annäherungsorgan (4) in der Form eines hohlen, dichten Rohres darstellt, wobei die Anschläge (5) in den Innenbereich und den Außenbereich dieses Rohres vorspringen.

14. Messvorrichtung (1) nach einem der vorhergehenden Ansprüche, **dadurch gekennzeichnet, dass** das genannte Bild in Form einer Computerdatei (22) erzeugt wird, welche in Speicher (23) abgespeichert ist und von einer Verarbeitungskomponente (24) gemäß zumindest eines gespeicherten Bild-Verarbeitungsprogramms (25) verarbeitet wird, unter Berücksichtigung der Daten (26), welche dem genannten Profil (7, 12) des sichtbaren Abschnitts von jedem Anschlag (5, 15) entsprechen.

## Claims

1. A device (1, 100) to measure the diameter of a hole (2) or of a shaft (3) such that it comprises, at .least:
- one element (4, 20) to approach the inner wall of the hole (2) or the outer wall of the shaft(3),
- limit stops (5, 15) mobile with respect to the approach element (4, 20) and intended to press against the inner wall of the hole (2) or against the outer wall of the shaft (3), and
- an element (6) to capture at least one image (58, 59, 60, 65) as a line or in two dimensions,
measurement device (1) wherein the limit stops (5, 15) each comprise at least one portion that may be seen by the capture element (6), at least when the limit stops (5, 15) are arranged against the inner wall of the hole (2) or against the outer wall of the shaft (3), each visible portion delimiting a profile (7, 12) determined so that the said image is representative of the diameter, device wherein the limit stops (5, 15) are integral with at least one flexible membrane (8), said flexible membrane (8) delimiting at least one chamber (9, 49), said flexible membrane (8) being deformable under the effect of the pressurization by an organ (10) to adjust, the pressure in said chamber (9, 49), said chamber (9, 49) being arranged in the approach element (4, 20) so that the limit stops (5, 15) advance towards the inner wall of the hole (2) or the outer wall of the shaft (3) during the pressurization.

2. A measurement device (1) according to Claim 1, wherein the limit stops (5, 15) are each in the form of a sphere or portion of a sphere of known diameter, each profile (7, 12) determined is in the shape of the arc of a circle.

3. A measurement device (1) according to Claims 1 or 2, wherein the two profiles (12) determined for each limit stop (15), able to be seen by the capture element (6), are arranged on each limit stop (15) on either side of a bearing surface (11) of each limit stop (15) against the inner wall (2) of the hole or against the outer wall of the shaft (3).

4. A measurement device (1) according to Claims 1 or 2, wherein the said profile (7, 12) determined for each limit stop (5, 15), able to be seen by the capture element (6), is arranged on each limit stop (5, 15) facing a bearing surface (11) for each limit stop against the inner wall of the hole (2) or against the outer wall of the shaft (3).

5. A measurement device (1) according to one of the previous Claims, wherein the said image (58, 59, 60, 65) is also representative of the contour of the hole (2) or shaft (3) section whose diameter is to be measured.

6. A measurement device (1) according to one of the above Claims, wherein there are five limit stops in the form of balls evenly spaced around the approach element.

7. A measurement device (1) according to one of the above Claims, wherein the capture element (6) of the said image (58, 59, 60, 65) is arranged so as to perform a focusing operation in the contact plane (50) of the limit stops (5, 15) .

8. A measurement device (1) according to one of the above Claims, wherein it comprises an element (16, 64) to illuminate the limit stops (5, 15).

9. A measurement device (1) according to the previous Claim, used to measure said hole (2), wherein the limit stops (5) are positioned between the illuminating element (16) and the said image capture element (6).

10. A measurement device (1) according to one of the above Claims, wherein it comprises a marking element (17) arranged in the field of vision of the capture element (6), to the fore of the limit stops (5).

11. A measurement device (1) according to one of the previous Claims, wherein the limit stops (5, 15) are arranged with respect to the approach element (4, 20) so as to delimit a contact line positioned in a plane (50) perpendicular to the axis (55) of the approach element (4, 20)

12. A measurement device (1) according to the previous Claim, wherein it comprises a gripping element (21, 27) whose position with respect to the approach element is determined.

13. A measurement device (1) according to one of the above Claims, used for the measurement of said hole (2), wherein the approach element (4) is in the form of a sealed hollow tube, the limit stops (5) protruding to the inside and outside of this tube.

14. A measurement device (1) according to one of the previous Claims, wherein the said image is generated in the form of a computer file (22) stored in a memory (23) and processed by a processing component (24) according to at least one memorised image processing programme (25) taking into account the data (26) representative of said profile (7, 12) of the visible portion of each limit stop (5, 15).
